# EUROPÄISCHE PATENTANMELDUNG

(11) **EP 1 123 865 A1**
(43) Veröffentlichungstag der Anmeldung: **16.08.2001**
(21) Anmeldenummer: 01102356.1
(22) Anmeldetag: 02.02.2001
(51) Int. Cl.: B63H 23/30, B63H 23/08, B63H 23/10, F16H 1/22, F16H 37/06

(54) **Bootsantrieb**

(30) Priorität: 08.02.2000 DE 10005538
(71) Anmelder: ZF FRIEDRICHSHAFEN Aktiengesellschaft, 88038 Friedrichshafen (DE)
(72) Erfinder: Amann, Wolfgang, 88074 Meckenbeuren (DE)

(57) **Zusammenfassung**

Die Erfindung geht aus von einem Bootsantrieb (1) mit einem über eine Kupplung (13) zuschaltbaren Zusatzmotor (12) zum Antrieb einer Abtriebswelle (11) bei niedrigen Geschwindigkeiten des Boots und mit einem Antriebsmotor (2), der über eine Antriebswelle (3) und ein Wendegetriebe mit zwei lastschaltbaren Kupplungen (15, 16) und mehreren Zahnradstufen (5, 10; 6, 7, 8, 10) die Abtriebswelle (11) antreibt, wobei ein Zahnrad (10) auf der Abtriebswelle (11) mit einem ersten, losen Zahnrad (5) das über eine erste lastschaltbare Kupplung (15) mit der Antriebswelle (3) kuppelbar ist, sowie mit einem ersten Zahnrad (6) auf einer Zwischenwelle (9) kämmt und ein zweites, festes Zahnrad (7) auf der Antriebswelle (3) mit einem zweiten Zahnrad (8) auf der Zwischenwelle (9) kämmt. Es wird vorgeschlagen, daß das erste Zahnrad (6) auf der Zwischenwelle (9) befestigt ist, daß das zweite Zahnrad (8) auf der Zwischenwelle (9) drehbar gelagert und über die zweite lastschaltbare Kupplung (16) mit der Zwischenwelle (9) kuppelbar ist, und daß der Zusatzmotor (12) mit der Zwischenwelle (9) kuppelbar ist. Dadurch ist mit einem geringen Bauaufwand ein Bootsantrieb (1) mit einem Zusatzmotor (12) für die Langsamfahrt zu verwirklichen.

## Beschreibung

Die Erfindung betrifft einen Bootsantrieb nach dem Oberbegriff von Anspruch 1.

Antriebsanlagen für Schiffe oder Boote bestehen aus mindestens einem Antriebsmotor, einem Getriebe, einer Propellerwelle und einem Propeller. Das Getriebe ist meist als Wendegetriebe ausgeführt und ermöglicht die Drehzahlumkehr einer Abtriebswelle bezogen auf eine Antriebswelle. Sind die Drehrichtungen der Antriebswelle und der Abtriebswelle gleich, so spricht man von einem Gleichlauf. Hat die Abtriebswelle eine zur Antriebswelle gegensinnige Drehrichtung, spricht man von einem Gegenlauf. Durch das Getriebe wird gleichzeitig die Drehzahl des Antriebsmotors im Verhältnis zur Drehzahl der Propellerwelle festgelegt.

Das Wendegetriebe umfaßt in der Regel eine lastschaltbare Kupplung auf der Antriebswelle und eine lastschaltbare Kupplung auf einer Zwischenwelle, die über entsprechende Zahnradstufen, ein mit der Antriebswelle kuppelbares Losrad den Gegenlauf und ein auf der Zwischenwelle sitzendes Rad mit einem auf der Abtriebswelle festsitzenden Zahnrad den Gleichlauf der Abtriebswelle zur Antriebswelle herstellen.

Da die Abtriebswelle bei geschalteter Kupplung starr mit dem Antriebsmotor verbunden ist, kann die Bootsgeschwindigkeit lediglich über die Drehzahl des Antriebsmotors verändert werden. Geringe Bootsgeschwindigkeiten werden also nur bei einer geringen Drehzahl des Antriebsmotors erreicht. Diese wird nach unten durch die geringstmögliche Leerlaufdrehzahl des Antriebsmotors und die Getriebeuntersetzung begrenzt, während die maximale Bootsgeschwindigkeit durch die Nenndrehzahlen des Antriebsmotors und die Getriebeübersetzung bestimmt wird. In der Regel wird der Antriebsmotor nach der gewünschten maximalen Bootsgeschwindigkeit ausgewählt. Daher ist er für eine geringe Bootsgeschwindigkeit überdimensioniert.

Da der Antriebsmotor einen schlechteren Wirkungsgrad aufweist, wenn er nicht im Auslegungsbereich betrieben wird, führt dies bei Leerlaufdrehzahlen zu einem hohen spezifischen Kraftstoffverbrauch. Ferner verrußen die Brennräume des Antriebsmotors, wenn er bei einer geringen Drehzahl über einen langen Zeitraum betrieben wird.

Selbst wenn der Bootsantrieb im Leerlauf der Antriebsmaschine betrieben wird, wird die gewünschte Bootsgeschwindigkeit oft noch überschritten, da auch der Propeller des Boots auf die Maximalgeschwindigkeit ausgelegt wird. Um die Drehzahl der Abtriebswelle weiter abzusenken, wird die geschaltete Lastschaltkupplung mit einem Schlupf betrieben. Diese Betriebsart mit einer sehr geringen Bootsgeschwindigkeit wird als Trollingbetrieb bezeichnet und vor allem für das Fischen verwendet. In diesem Betriebszustand wird der Gesamtwirkungsgrad des Bootsantriebs durch die schlupfende Kupplung weiter verschlechtert, da die Reibungsverluste in der Kupplung in Wärme umgewandelt werden.

Es ist bekannt, für Langsamfahrt einen Zusatzmotor vorzusehen, der für diesen Betriebszustand ausgelegt ist und daher mit einem guten Wirkungsgrad arbeitet. Der Zusatzmotor treibt über eine schaltbare Kupplung eine zusätzliche Welle an, die über eine Getriebestufe mit einem Zahnrad auf der Abtriebswelle triebmäßig verbunden ist. Diese Konstruktion ist sehr aufwendig und kostspielig. Sie ist nur als Sonderlösung möglich. Der Antrieb der Propellerwelle über einen Zusatzmotor wird auch PTI (Power Take In) genannt.

Der Erfindung liegt die Aufgabe zugrunde, einen Bootsantrieb zu verwirklichen, der mit einem geringen Bauaufwand mit einem Zusatzmotor versehen werden kann. Sie wird gemäß der Erfindung durch die Merkmale des Anspruchs 1 gelöst. Weitere Ausgestaltungen ergeben sich aus den Unteransprüchen.

Nach der Erfindung ist das Zahnrad, das sich mit dem abtriebsseitigen Zahnrad im Eingriff befindet, auf der Zwischenwelle befestigt, während das Zahnrad, welches sich mit dem Rad auf der Antriebswelle im Eingriff befindet, auf der Zwischenwelle drehbar gelagert und über die zweite lastschaltbare Kupplung mit der Zwischenwelle kuppelbar ist. Ferner ist der vorsehbare Zusatzmotor mit der Zwischenwelle kuppelbar. Werden die lastschaltbaren Kupplungen für den Gleichlauf und Gegenlauf geöffnet, kann der Antriebsmotor stillgesetzt werden, während der Zusatzmotor über die Zwischenwelle die Abtriebswelle antreibt. Es ist dafür keine zusätzliche Getriebewelle erforderlich. Der Zusatzmotor kann in einfacher Weise nachgerüstet werden, insbesondere wenn an der Zwischenwelle eine entsprechende Flanschverbindung vorgesehen ist.

Zweckmäßigerweise wird die Getriebeschmierung durch eine Zusatzpumpe während der Langsamfahrt sichergestellt, die von der Zwischenwelle oder Abtriebswelle angetrieben wird. In vorteilhafter Weise dient eine Schleppfahrtpumpe als Schmierpumpe.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigen:

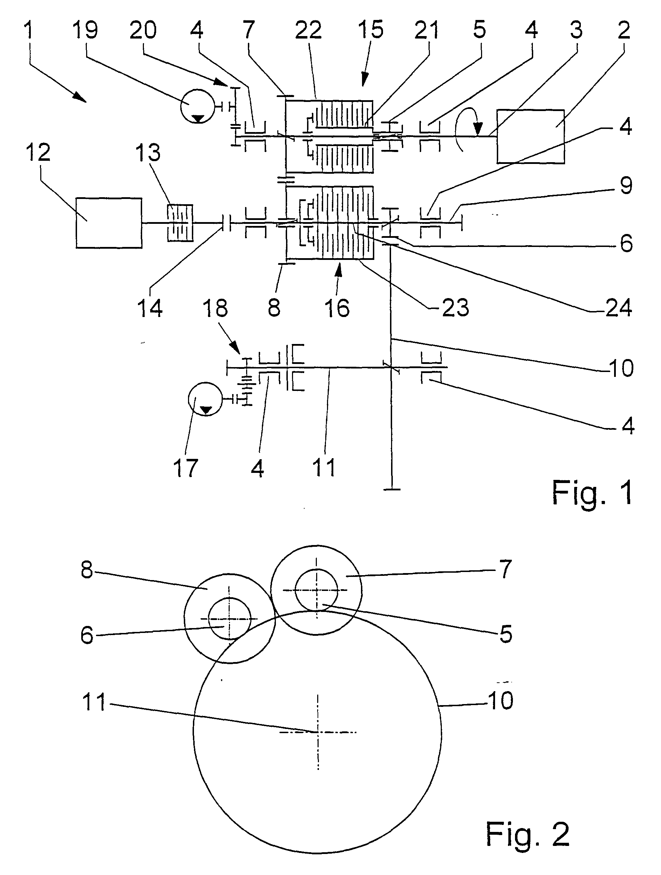

- Fig. 1: einen schematisch dargestellten, erfindungsgemäßen Bootsantrieb mit einem abgewickelten Getriebeplan und
- Fig. 2: eine schematische Darstellung der Zahnräder eines Wendegetriebes in einer Sicht in Achsrichtung.

Der dargestellte Bootsantrieb 1 besitzt einen Antriebsmotor 2, dessen Antriebswelle 3 in Lager 4 gelagert ist. Auf der Antriebswelle 3 ist ein erstes Zahnrad 5 drehbar gelagert, das über eine erste lastschaltbare Kupplung 15 mit der Antriebswelle 3 kuppelbar ist. Zu diesem Zweck ist ein innerer Lamellenträger 21 der ersten lastschaltbaren Kupplung 15 mit dem ersten Zahnrad 5 auf der Antriebswelle 3 verbunden, während ein äußerer Lamellenträger 22 über ein zweites Zahnrad 7, das fest auf der Antriebswelle 3 sitzt, mit dieser drehfest verbunden ist.

Das erste Zahnrad 5 auf der Antriebswelle 3 kämmt mit einem Zahnrad 10, das fest auf einer Abtriebswelle 11 sitzt, die in Lagern 4 gelagert ist. Wird die erste lastschaltbare Kupplung 15 geschaltet, ist die Abtriebswelle 11 triebmäßig mit der Antriebswelle 3 im Gegenlauf verbunden.

Das zweite Zahnrad 7 auf der Antriebswelle 3 kämmt mit einem zweiten Zahnrad 8, das drehbar auf einer Zwischenwelle 9 gelagert und fest mit einem äußeren Lamellenträger 23 einer zweiten lastschaltbaren Kupplung 16 verbunden ist. Ein innerer Lamellenträger 24 der lastschaltbaren Kupplung 16 ist drehfest mit der Zwischenwelle 9 und damit mit einem ersten Zahnrad 6 verbunden, das drehfest auf der Zwischenwelle 9 sitzt. Dieses kämmt mit dem Zahnrad 10 auf der Abtriebswelle 11, so daß bei geöffneter erster lastschaltbarer Kupplung 15 und geschalteter zweiter lastschaltbarer Kupplung 16 ein Gleichlauf zwischen der Antriebswelle 3 und der Abtriebswelle 11 hergestellt wird.

Ein Zusatzmotor 12 kann über eine Kupplung 13, die über eine Flanschverbindung 14 an der Zwischenwelle 9 befestigt ist, zugeschaltet werden. In diesem Fall sind die lastschaltbaren Kupplungen 15 und 16 geöffnet, so daß die Abtriebswelle 11 allein vom Zusatzmotor 12 angetrieben wird, während der Antriebsmotor 2 stillgesetzt werden kann. Der Zusatzmotor 12 und die Kupplung 13 können wie dargestellt auf der Antriebsseite der Zwischenwelle 9 oder auf der Abtriebsseite angeordnet werden. Eine zusätzliche Getriebewelle ist nicht erforderlich.

Zur Schmierölversorgung des Bootsantriebs 1 dient eine Schmierölpumpe 19, die über eine Zahnradstufe 20 von der Antriebswelle 3 angetrieben wird. Um die Getriebeschmierung auch sicherzustellen, wenn nur der Zusatzmotor 12 im Einsatz ist, wird eine zusätzliche Schmierölpumpe vorgesehen, die entweder von der Zwischenwelle 9 oder der Abtriebswelle 11 angetrieben wird. Im dargestellten Fall dient eine Schleppfahrpumpe 17, die von der Abtriebswelle 11 über eine Zahnradstufe 18 angetrieben wird, gleichzeitig als zusätzliche Schmierölpumpe.

### Bezugszeichen

- 1: Bootsantrieb
- 2: Antriebsmotor
- 3: Antriebswelle
- 4: Lager
- 5: erstes Zahnrad
- 6: erstes Zahnrad
- 7: zweites Zahnrad
- 8: zweites Zahnrad
- 9: Zwischenwelle
- 10: Zahnrad
- 11: Abtriebswelle
- 12: Zusatzmotor
- 13: Kupplung
- 14: Flanschverbindung
- 15: erste lastschaltbare Kupplung
- 16: zweite lastschaltbare Kupplung
- 17: Schleppfahrtpumpe
- 18: Zahnradstufe
- 19: Schmierölpumpe
- 20: Zahnradstufe
- 21: Innerer Lamellenträger
- 22: Äußerer Lamellenträger
- 23: Äußerer Lamellenträger
- 24: Innerer Lamellenträger

## Patentansprüche

1. Bootsantrieb (1) mit einem Antriebsmotor (2), der über eine Antriebswelle (3) und ein Wendegetriebe mit zwei lastschaltbaren Kupplungen (15, 16) und mehreren Zahnradstufen (5, 10; 6, 7, 8, 10) eine Abtriebswelle (11) antreibt, wobei ein Zahnrad (10) auf der Abtriebswelle (11) gleichzeitig mit einem ersten, losen Zahnrad (5), welches über eine erste lastschaltbare Kupplung (15) mit der Antriebswelle (3) kuppelbar ist, und einem auf einer Zwischenwelle angeordneten ersten Zahnrad (6) kämmt, und wobei ein zweites, festes Zahnrad (7) auf der Antriebswelle (3) mit einem zweiten Zahnrad (8) auf der Zwischenwelle (9) kämmt, dadurch **gekennzeichnet**, daß das erste Zahnrad (6) auf der Zwischenwelle (9) befestigt ist, daß das zweite Zahnrad (8) auf der Zwischenwelle (9) drehbar gelagert und über die zweite lastschaltbare Kupplung (16) mit der Zwischenwelle (9) kuppelbar ist, so daß ein zuschaltbarer Zusatzantrieb mit einem Zusatzmotor (12) und einer Kupplung (13) zum Antrieb der Abtriebswelle (11) bei niedrigen Geschwindigkeiten des Boots vorsehbar ist, wobei der Zusatzmotor (12) über die Kupplung (13) mit der Zwischenwelle (9) kuppelbar ist.

2. Bootsantrieb (1) nach Anspruch 1, dadurch **gekennzeichnet**, daß die Kupplung (13), die dem Zusatzmotor (12) zugeordnet ist, an der Zwischenwelle (9) angeflanscht ist.

3. Bootsantrieb (1) nach Anspruch 1 oder 2, dadurch **gekennzeichnet**, daß von der Zwischenwelle (9) oder Abtriebswelle (11) eine Schmierölpumpe (19) angetrieben wird.

4. Bootsantrieb (1) nach Anspruch 3, dadurch **gekennzeichnet**, daß eine Schleppfahrtpumpe als Schmierölpumpe (19) dient.
